# EUROPEAN PATENT APPLICATION

(11) **EP 2 695 649 A1**
(43) Date of publication of application: **12.02.2014**
(21) Application number: 12765261.8
(22) Date of filing: 29.03.2012
(51) Int. Cl.: A63F 13/10, A63F 13/12

(54) **GAME MACHINE, GAME SYSTEM, AND COMPUTER PROGRAM FOR GAME MACHINE**

(30) Priority: 31.03.2011 JP 2011080922
(71) Applicant: Konami Digital Entertainment Co., Ltd., Tokyo 107-8324 (JP)
(72) Inventor: SHIBAMIYA, Masakazu, Tokyo 107-8324 (JP); ADACHI, Yoshitaka, Tokyo 107-8324 (JP)
(74) Representative: Haley, Stephen
(86) International application number: PCT/JP2012/058412
(87) International publication number: WO 2012/133673

(57) **Abstract**

A game machine controls an action of an operation character set to be operated by a player based on an operation of the player with respect to the operation character, controls an action of a control character to act in association with the operation character so as to select from a plurality of predetermined actions by referring to an instruction from the player to the control character, accumulates action information (31) of respective actions of the operation character individually and accumulates the instruction from the player with respect to an action of the control character as instruction information (32). The game machine determines an instruction with reference to the instruction information (32), selects an action corresponding to the instruction from the plurality of actions and controls an action of the control character based on the action information (31) corresponding to the selected action in the case that there is no instruction from the player.

## Description

### Technical Field

The present invention relates to determination of an action of a computerized character, and relates to a game machine and the like that can develop the character so that an action of the character is determined and controlled according to an intention of a player.

### Background Art

As a game that can develop a character, there has been known a baseball game that can develop a team to be strong by enhancing the ability of a player character (see, for example, Patent Literature 1), or a developing game that grows a character by taking care of a virtual life character (see, for example, Patent Literature 2).

### Citation List

### Patent Literature

Patent Literature 1: JP-A-2010-162177
Patent Literature 2: JP-A-2007-202778

### Summary of Invention

### Technical Problem

When a game is played by making a plurality of characters appear in a game field, there is a case where a computerized character acting in association with a character operated by a player is made to appear in the game. Such a computerized control character is set to perform a computer-controlled action to assist a character operated by a player, or to take an action according to an instruction of a player. However, the player may be dissatisfied because the control character originally set to assist the character performs an action that is not intended by the player. Meanwhile, there is no game that can develop a control character so that an action of the control character is determined according to an intention of a player on a field.

Therefore, the present invention aims to provide a game machine, a game system and a computer program of the game machine, capable of developing a character so that the character acts in association with a character operated by a player

### Solution to Problem

The game machine of the present invention is a game machine comprising: an operation character action control device which controls an action of an operation character set to be operated by a player based on an operation of the player with respect to the operation character; a control character action control device which controls an action of a control character to act in association with the operation character so as to select from a plurality of predetermined actions by referring to an instruction from the player to the control character; an action information accumulating device which accumulates action information of respective actions of the operation character individually; and an instruction information accumulating device which accumulates the instruction from the player with respect to an action of the control character as instruction information; wherein the control character action control device determines an instruction with reference to the accumulated instruction information, selects an action corresponding to the instruction from the plurality of actions and controls an action of the control character based on the action information corresponding to the selected action in the case that there is no instruction from the player with respect to the control character.

According to the game machine of the present invention, the control character acts in a controlled state to select an action among a plurality of predetermined options while receiving an instruction from the player. Although a detailed action cannot be selected by an operation of the player, a course of action of the control character is determined by issuing an instruction to the control character. The instruction issued to the control character by the player is accumulated as instruction information. On the other hand, an action of the operation character is controlled based on an operation of the player, and the action is accumulated as action information. That is, according to the play of a game, a desired action of the control character is accumulated as an instruction in the instruction information, and an operational habit of the player is accumulated in the action information through an action of the operation character. When there is no instruction from the player, an action of the control character is determined with reference to the instruction information, and an actual action of the control character is determined with reference to the action information. Therefore, the operational habit of the player is reflected on the action of the control character, and the control character appears to grow by viewing the action of the operation character. Since an action frequently instructed by the player is performed even when there is no instruction, the control character can be developed and grown. Therefore, the game can be diversified, and the satisfaction of the player can be increased.

As one aspect of the game machine of the present invention, further comprising an action evaluating device which makes the player evaluate an action of the control character wherein the control character action control device controls an action of the control character with further reference to the evaluation result of the action evaluating device. According to this, an action of the control character is evaluated by the player, and an action of the control character is controlled with reference to the evaluation result. Therefore, the control character can perform an action evaluated by the player, and the player can feel as if the player himself grows the control character.

In the aspect of providing the action evaluating device, wherein the control character action control device controls an action of the control character so that the high-evaluated action is apt to be selected according to an evaluated ratio of the evaluation result. According to this, since the high-evaluated action is taken by the control character, the operational preference of the player can be reflected and the achievement of the educational result can be obtained.

In the aspect of providing the action evaluating device, wherein The action evaluating device allow the player to modify an action of the control character as the evaluation of an action of the control character, and the control character action control device controls an action of the control character so as to take a modified action. According to this, when the control character performs an action that is not intended by the player, an action of the control character can be modified and thus an action desired by the player can be promoted. Since the modified action is accumulated and reflected on an action of the control character, the player can be satisfied with the developing result while enjoying the process of developing the control character.

As one aspect of the game machine of the present invention, wherein in the instruction information, each instruction selectable by the player and the count of selection of the instruction are accumulated in association with each other. According to this, since the count of selection of the instruction by the player is accumulated, the instruction tendency of the player can be understood. Since the control character is made to act based on the instruction information, the control character can be made to act according to the desire of the player.

As one aspect of the game machine of the present invention, wherein in the action information, a plurality of action data counted the frequency of an action of the operation character selected based on an operation of the player is accumulated. According to this, since an action of the operation character operated by the player is accumulated, an action of the player can be reflected on the control character. Accordingly, since an action of the control character can be made to be similar to an action of the operation character, the character can be grown according to the operational tendency and degree of the player developing the control character.

The game system of the present invention is a game system including a plurality of game machines and a server that are communicatively connected to each other through a network, wherein each of the game machine comprising: an operation character action control device which controls an action of an operation character set to be operated by a player based on an operation of the player with respect to the operation character; a control character action control device which controls an action of a control character to act in association with the operation character so as to select from a plurality of predetermined actions by referring to an instruction from the player to the control character; an action information accumulating device which accumulates action information of respective actions of the operation character individually; an instruction information accumulating device which accumulates the instruction from the player with respect to an action of the control character as instruction information; and a data transmitting/receiving device which transmits the instruction information and the action information to the server in association with the player and receives the instruction information and the action information of the requesting player; wherein the control character action control device determines an instruction with reference to the accumulated instruction information, selects an action corresponding to the instruction from the plurality of actions and controls an action of the control character based on the action information corresponding to the selected action in the case that there is no instruction from the player with respect to the control character, and the server comprising an information managing device which manages the instruction information and the action information received from the game machine in association with the player. According to the present invention, even when a game is played through any one of the game terminal apparatuses connected to each other through a network, a game play history including the instruction information and the action information necessary to control an action of the control character can be received. Since the server manages the instruction information and the action information about each player, a game can be played through any game terminal apparatus.

The computer program of the present invention is a computer program causes a computer of a game machine to serve as: an operation character action control device which controls an action of an operation character set to be operated by a player based on an operation of the player with respect to the operation character; a control character action control device which controls an action of a control character to act in association with the operation character so as to select from a plurality of predetermined actions by referring to an instruction from the player to the control character; an action information accumulating device which accumulates action information of respective actions of the operation character individually; and an instruction information accumulating device which accumulates the instruction from the player with respect to an action of the control character as instruction information; wherein the control character action control device determines an instruction with reference to the accumulated instruction information, selects an action corresponding to the instruction from the plurality of actions and controls an action of the control character based on the action information corresponding to the selected action in the case that there is no instruction from the player with respect to the control character. By executing the program of the present invention in a computer of a game system, the game system can serve as the game system of the present invention.

### Advantageous Effects of Invention

As described above, according to the present invention, the control character acts in a controlled state to select an action among a plurality of predetermined options while receiving an instruction from the player. Although a detailed action cannot be selected by an operation of the player, a course of action of the control character is determined by issuing an instruction to the control character. The instruction issued to the control character by the player is accumulated as instruction information. On the other hand, an action of the operation character is controlled based on an operation of the player, and the action is accumulated as action information. That is, according to the play of a game, a desired action of the control character is accumulated as an instruction in the instruction information, and an operational habit of the player is accumulated in the action information through an action of the operation character. When there is no instruction from the player, an action of the control character is determined with reference to the instruction information, and an actual action of the control character is determined with reference to the action information. Therefore, the operational habit of the player is reflected on the action of the control character, and the control character appears to grow by viewing the action of the operation character. Since an action frequently instructed by the player is performed even when there is no instruction, the control character can be developed and grown. Therefore, the game can be diversified, and the satisfaction of the player can be increased.

### Brief Description of Drawings

Fig. 1 is a diagrammatic illustration of an overall view of a game system including a game machine according to one aspect of the present invention.
Fig. 2 is a block diagram of a game system.
Fig. 3 is a flow chart showing a game execution processing routine executed by a control unit.
Fig. 4 is a diagram describing action information.
Fig. 5 is a flow chart showing a control character instruction processing routine executed by the control unit.
Fig. 6 is a diagram describing instruction information.
Fig. 7 is a diagram describing evaluation information.
Fig. 8 is a diagram showing an example of evaluation value data.

### Description of Embodiments

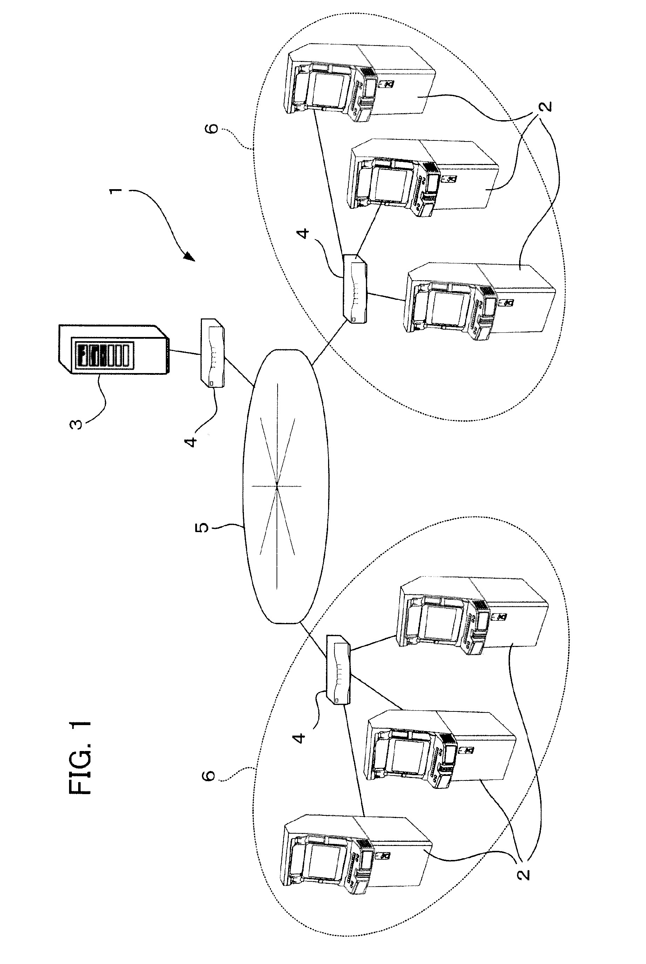

Fig. 1 shows an overall view of a game system including a game machine according to one aspect of the present invention. In a game system 1, a plurality of game machines 2 and a center server 3 as a server are connected through a router 4 to a network 5. The network 5 is preferably the Internet. Each game machine 2 is configured as a business use game machine that collects a fee for a game. An appropriate number of game machines 2 are installed in a commercial facility such as a store 6. A local server may be installed between the game machine 2 and the router 4 such that the game machine 2 is communicatively connected to the center server 3 through the local server.

The center server 3 is installed by an operator of the game system 1, and provides various services through the network 5 to the game machine 2 or a player that is a user of the game machine 2. As an example, the center server 3 provides a service of updating a game program or data through the game machine 2, a service of storing play data including a play history of the player, save data, or the like, on the center server 3 by authenticating a player of the game machine 2 by the ID (hereinafter may be referred to as player ID) and password, and the like. In addition, although one center server 3 is shown in Fig. 1, a plurality of center servers 3 may be installed and processings necessary for a network service may be shared between the plurality of center servers 3. The game machines 2 and the center server 3 are allocated respective unique addresses for identification on the network 5, and the address is used to specify a communication partner in communication between the game machines 2 or between the game machine 2 and the center server 3.

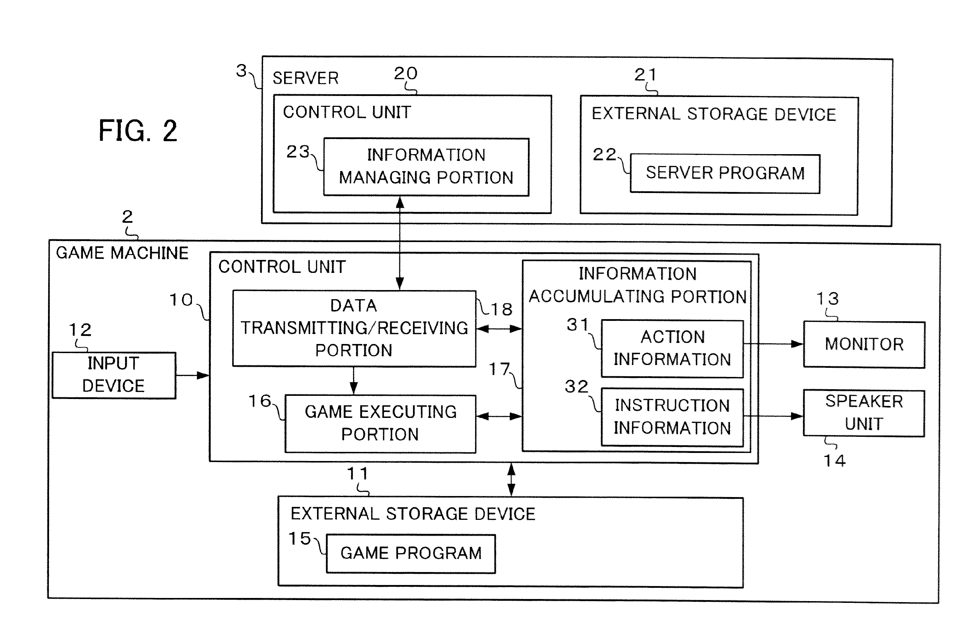

Fig. 2 is a block diagram of the above-described game system 1. The game machine 2 is provided with a control unit 10. The control unit 10 is a computer unit that includes a microprocessor and an internal storage device such as a ROM recording a program of an operating system and the like to be executed in the microprocessor, and a RAM providing a work area for the microprocessor. An external storage device 11, an input device 12 for a game, a monitor (for example, a liquid crystal monitor) 13 and a speaker unit 14 are connected to the control unit 10. The external storage device 11 is a storage device that includes a nonvolatile storage medium such as a magnetic storage medium, an optical storage medium and an EEPROM. The input device 12 includes a plurality of operating portions (not shown) receiving an operation of the player, and issues a signal corresponding to an operation of the operating portions to the control unit 10. The input device 12 is, for example, a gun-type controller mimicking a weapon such as a handgun. The player operating the input device 12 can shoot a target by pulling a trigger while pointing a gun muzzle of the controller to the target that is appropriately displayed on a screen of the monitor 13. In addition, a sensor or the like detecting a direction of the gun muzzle may be implemented using the well-known technology.

By reading a game program 15 recorded in the external storage device 11 and executing this, the control unit 10 is provided with a game executing portion 16, an information accumulating portion 17, and a data transmitting/receiving portion 18 as a logical device. The game executing portion 16 executes a game in the game machine 2 according to the game program 15, and manages the progress thereof. The information accumulating portion 17 accumulates action information 31 and instruction information 32 according to the progress of a game executed in the game machine 2, which will be described below. The data transmitting/receiving portion 18 performs transmission of accumulated action information 31 and instruction information 32 to the center server 3, and acquisition request and reception of own action information 31 and instruction information 32 from the center server 3. The center server 3 is provided with a control unit 20 and an external storage device 21. The control unit 20 is a computer unit like the control unit 10. By reading a server program 22 recorded in the external storage device 21 and executing this, the control unit 20 is provided with an information managing portion 23 as a logical device. The information managing portion 23 manages the action information 31 and the instruction information 32 transmitted from each game machine 2 in association with the player ID, and transmits the action information 31 and the instruction information 32 to the game machine 2 according to the request from each game machine 2.

An example of the game executed in the game machine 2 may be a communication fighting game between the game machine 2 and any other game machine 2 through the network 5. As an example of the communication fighting game, the game executing unit 13 executes an action-type game in which a player searches for a virtual game space by operating a character set as an operation object and competes in performing a predetermined mission. The player operates the input device 12 being a gun-type controller, fights with an opponent character operated by an opponent player being a fighting opponent, and competes with the opponent player for a score. In the game space, a computerized control character acting in association with an operation character operated by the player acts around the operation character to assist an action of the operation character. As an example, the control character is a subordinate of the operation character in the game space, and the player can instruct an action to be taken by the control character.

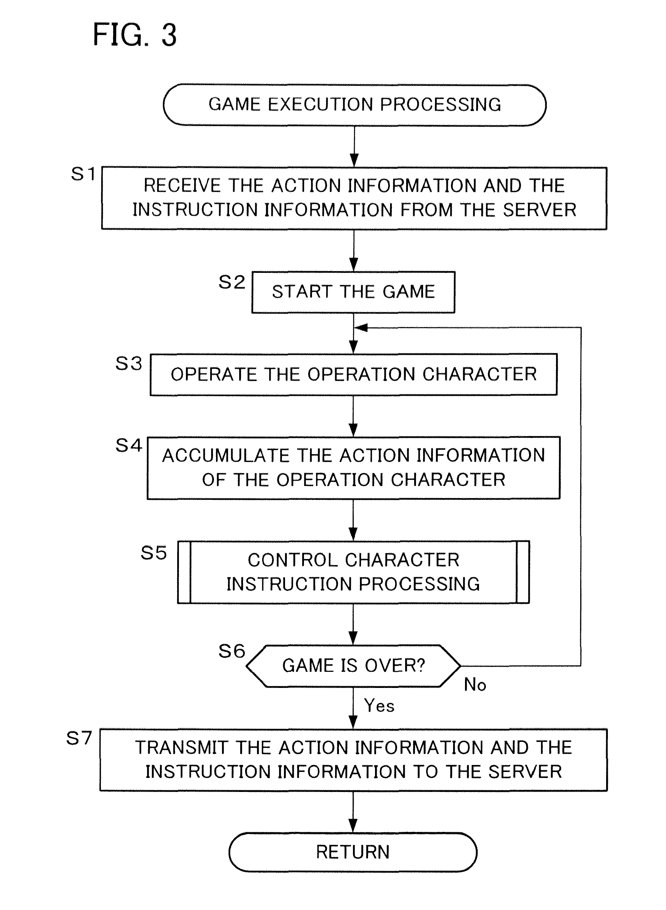

It will be described the game execution processing executed by the control unit 10 with reference to a flow chart of Fig. 3. The game execution processing is executed when the player pays a play fee and requests a game play. First, in step S1, the control unit 10 requests the action information 31 and the instruction information 32 of the player to the center server 3 and receives these. The action information 31 and the instruction information 32 of the player may be received by inquiring about the player ID. The action information 31 and the instruction information 32 will be described below. Next, in step S2, the control unit 10 starts a game in the game machine 2. In step S3, based on an operation signal from the input device 12 by the operation of the player, the control unit 10 makes the operation character act in the game, which is displayed on the monitor 13.

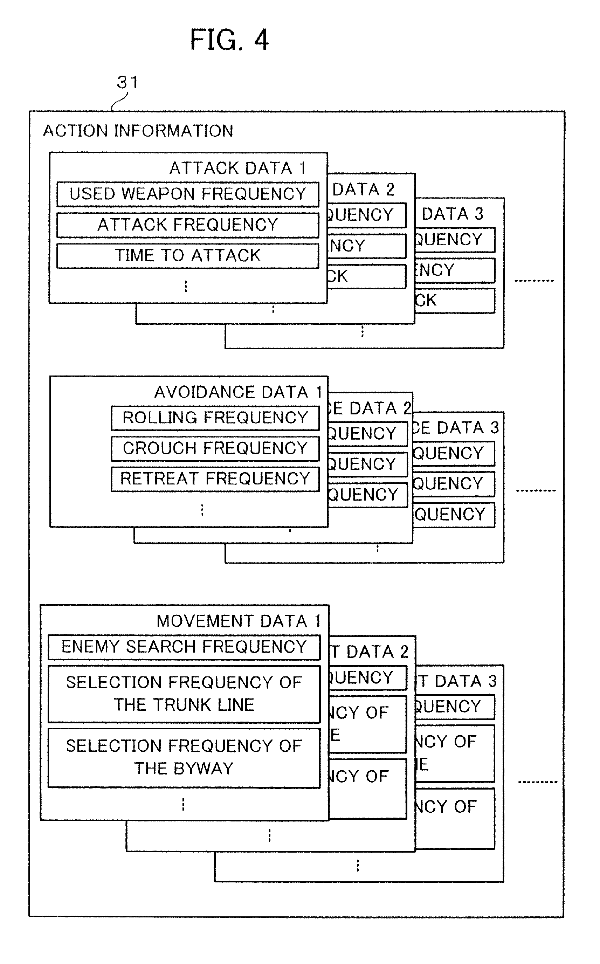

In step S4, the control unit 10 accumulates the action information 31 of the operation character operated in step S3. Fig. 4 is a diagram describing the action information 31. The action information 31 is accumulated while occasionally counting an action taken by operating the operation character by the player in a stage, a scene, a mission, or the like of the game play, or in a predetermined range such as a predetermined period or area. The action information 31 is accumulated as respective data of respective actions taken by the operation character, such as attack, avoidance, and movement, in the respective predetermined ranges described above. In the attack data, a used weapon frequency such as a used weapon type or count, an attack frequency such as an attack interval or an attack time, a time to attack, and the like are accumulated. In the avoidance data, a rolling frequency such as a rolling count, a crouch frequency and a retreat frequency are accumulated. In the movement data, an enemy search frequency such as an enemy search count, and also includes the frequency of selection of a movement direction such as a trunk line or a byway are accumulated.

For example, in the case that the operation character attacks with a machine gun in an area, if the area is associated with attack data 1, a used weapon of the attack data 2 of the action information 31 is counted as "machine gun/one time", and data such as an attack frequency (attack count) at that time or a time to attack is accumulated. The operations of the player are associated with the respective data in the respective predetermined ranges or actions described above. When the player performs an operation, the operation, that is, the action of the operation character is counted in the data and is accumulated in the action information 31. The accumulation of the action information 31 is performed whenever the player performs an operation.

In step S5, the control unit 10 executes control character instruction processing. The control character can be developed by evaluating the action instructed to the control character associated with the operation character. The control character instruction processing will be described below in detail. When the game is over in step S6, the control unit 10 transmits the action information 31 and the instruction information 32 acquired in this game play to the center server 3. In addition, the information managing portion 23 of the center server 3 manages the received action information 31 and instruction information 32 for each player ID, and transmits according to the request of each game machine 2. Then, the control unit 10 quits the game execution processing. On the other hand, when determining in step S6 that the game is still being played, the control unit 10 returns to step S3 and continues the game execution processing including the control character instruction processing.

When the player pays a play fee, the action information 31 and the instruction information 32 are received from the center server 3 (step S1) and a game is started (step S2). An operation of the operation character is controlled based on an operation of the player (step S3), the operation of the operation character in step S3 is accumulated as the action information 31 (step S4), and the control character is instructed according to the operation of the player (step S5). When the game is over, the action information 31 and the instruction information 32 acquired in this game play are transmitted to the center server 3. Further, the processing of steps S1 and S6 executed by the data transmitting/receiving portion 18 of the control unit 10 serves as a data transmitting/receiving device, and the processing of step S3 executed by the game executing portion 16 serves as an operation character action control device, and the processing of step S3 executed by the information accumulating portion 17 serves as an action information accumulating device. Further, in the center server 3, the information managing portion 23 serves as an information managing device.

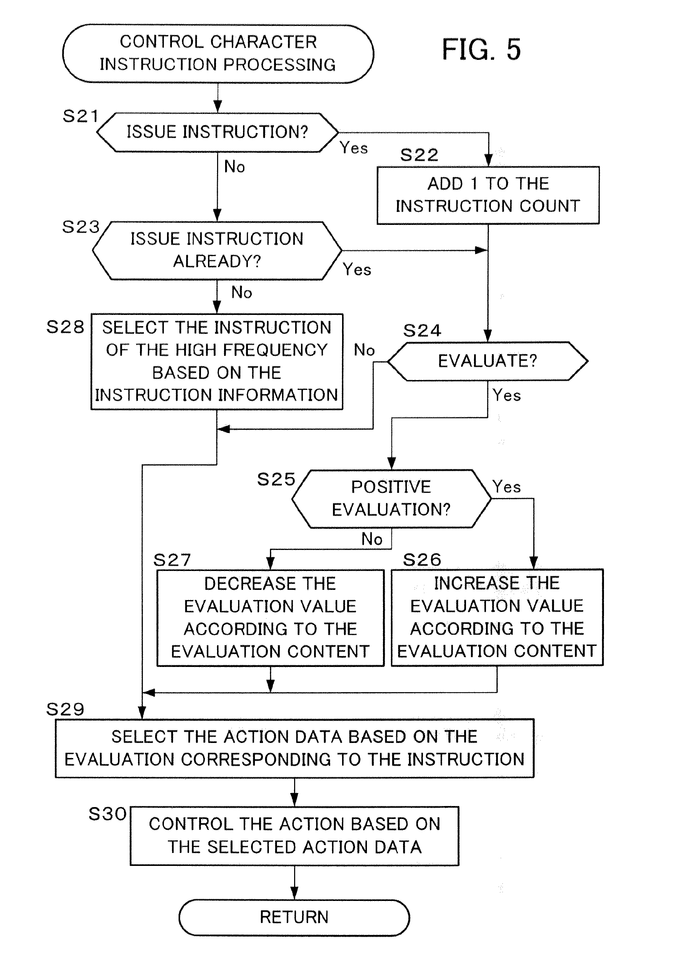

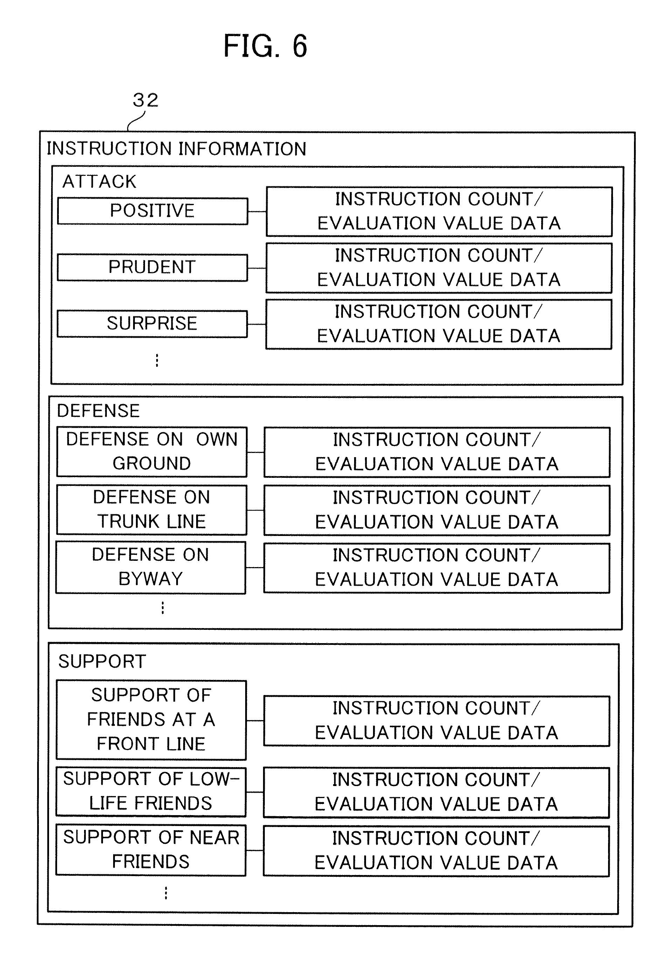

It will be described the control character instruction processing executed by the control unit 10 with reference to a flow chart of Fig. 5. The control character instruction processing corresponds to step S4 of the above-described game execution processing, and is executed according to an operation of the player during game execution. First, in step S21, the control unit 10 determines whether an instruction is issued to the control character based on an operation of the player. Fig. 6 is a diagram describing the instruction information 32. In the instruction information 32, instructions to the control character are classified according to different-purpose actions such as an attack system, a defense system, and a support system. Instructions selectable by the player are set in each system. For example, instructions such as, "positive" for attacking positively, "prudent" for attacking prudently so as not to be attacked by an opponent, and "surprise" for attacking suddenly so as not to be detected by an opponent, are set in the attack system. Instructions for respective areas, such as "defense on own ground", "defense on trunk line", and "defense on byway", are set in the defense system. Also, instructions for respective support objects, such as "support of friends at a front line", "support of low-life friends", and "support of near friends", are set in the support system. These instructions may be set as instructions that can be usually selected, and special instructions may also be set according to stages, areas, missions or the like. The player selects and issues a desired one of these instructions to the control character.

When an instruction is issued in step S21, the control unit 10 proceeds to step S22 to add 1 to an instruction count of the instruction selected in step S21, and then proceeds to step S24. Accordingly, the selection of an instruction by the player is counted, so that an instruction tendency of the player can be understood. On the other hand, when an instruction is not issued in step S21, the control unit 10 proceeds to step S23 to determine whether an action of the player has been determined because an instruction of the player has already been issued in the previous control character instruction processing. When an instruction has already been issued and the control character acts based on the instruction, the control unit 10 proceeds to step S24 to determine whether to cause the player to evaluate a current action of the control character that is taken with respect to the instruction. When an action with respect to the instruction has not yet been selected and determined and thus there is no need to evaluate an action, or when there is no evaluation input of the player, the control unit 10 proceeds to step S29 that will be described below.

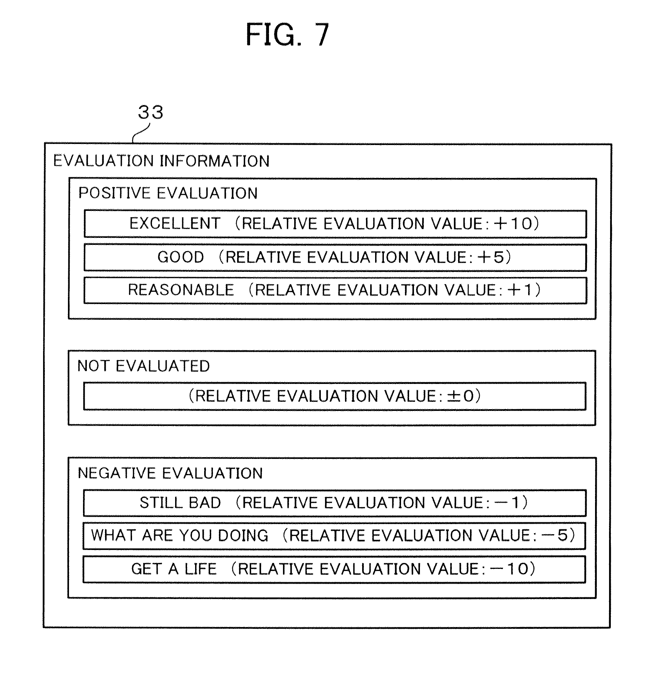

On the other hand, when an action has already been determined, the control unit 10 proceeds to step S25 to cause the player to evaluate the action. In step S25, the control unit 10 presents the player with an option for evaluation, and determines whether the evaluation is a positive evaluation. In order to cause the player to evaluate an action of the control character, an option divided step by step from a positive evaluation to a negative evaluation is displayed on the monitor 13 for selection by the player. The option for evaluation is presented based on evaluation information 33 shown in Fig. 7.

The evaluation information 33 is divided into a positive evaluation evaluating an action of the player highly and a negative evaluation evaluating an action of the player low. In the positive evaluation, phrases such as "excellent", "good" and "reasonable" representing evaluations on the control character are set in association with relative evaluation values that are increased/decreased when selected. For example, a relative evaluation value of "excellent" is set to +10, a relative evaluation value of "good" is set to +5, and a relative evaluation value of "reasonable" is set to +1. Likewise, in the negative evaluation, phrases such as "still bad", "what are you doing" and "get a life" representing evaluations on the control character are set in association with relative evaluation values -1, -5 and -10 corresponding to the respective evaluations. Furthermore, when the player does not select an evaluation, a relative evaluation value is set to ±0 and an evaluation value does not increase/decrease. In addition, the evaluation information 33 of Fig. 7 is an example, and the evaluation phrases and the relative evaluation values associated therewith may be modified according to game contents or purposes.

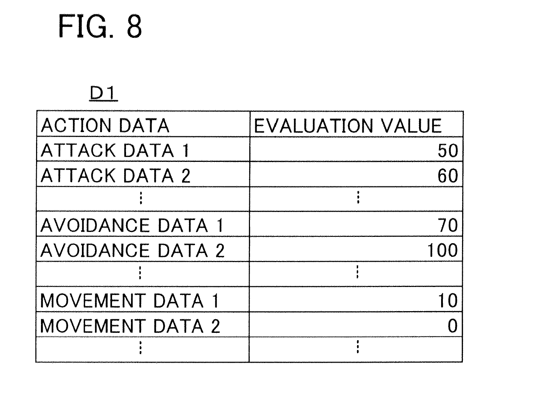

When the evaluation selected by the player is the positive evaluation, the control unit 10 proceeds to step S26 to increase the evaluation value according to the selected evaluation content. For example, when the player recognizes an action of the control character to be excellent and selects "excellent" of the positive evaluation, 10 is added to an evaluation value of a current state. Fig. 8 shows an example of evaluation value data D1. In the instruction information 32, an evaluation on a selected action is accumulated as evaluation value data D1 in association with each action. In the evaluation value data D1, the evaluation results of the player with respect to the respective actions taken by the control character are represented in numerical values. Herein, the respective action data of the action information 31 of the operation character are set as the respective actions that can be taken by the control character. In the evaluation value data D1, the respective evaluation values are associated with the respective action data. An initial value of "50" is allocated to each evaluation value of the action data. In the state of the initial value being "50", when the "excellent" is selected, "10" is added to the evaluation value and the sum is "60". On the other hand, the evaluation selected by the player is the negative evaluation, the control unit 10 proceeds to step S27 to decrease the evaluation value according to the selected evaluation. According to the relative evaluation value of the evaluation information 33, whenever an evaluation is performed by the player, the evaluation value of a relevant action increases/decreases.

On the other hand, when determining in step S23 that an instruction is not being issued, the control unit 10 proceeds to step S28 to select a frequently-selected instruction based on the instruction information 32. In this case, since an instruction count is accumulated, an instruction is selected according to the instruction count. The determination may be made by executing a lottery according to the ratio of the instruction count by using a random number. After the instruction selection of step S28, after the execution of step S26 or step S27, or when the evaluation is not performed in step S24, the control unit 10 proceeds to step S29 to select action data to be applied to an action of the control character with reference to the evaluation value data D1 corresponding to the selected instruction. Herein, the action data may be selected by a lottery performed according to the ratio of each evaluation value by using a random number. In this way, the high-evaluated action data is apt to be selected, but the low-evaluated action data may also be selected, thus diversifying a game factor. Further, as the control character accumulates experience, that is, as the use time of the control character increases, the lottery rate may be controlled so that the high-evaluated action data is selected. In addition, the lottery rate may be changed according to a personality allocated to the control character. A personality easy to develop or a personality difficult to develop is made to appear in the game, thereby diversifying a game factor.

Next, the control unit 10 proceeds to step S30 to control an action of the control character based on the selected action data. The selected action data is data based on the action information 31 of the operation character operated by the player. The tendency of an action selected by the player is specified in the action information 31. Therefore, for example, a weapon may be selected according to a weapon use frequency, a time from the detection of an enemy to the beating of the enemy in an attack may be set according to an average time of the player, or a hit rate of the attack may be set according to an average hit rate of the player. An action of the control character may be controlled according to the ratio or average specified in the action information 31. Accordingly, since the control character performs a similar action to the operation character, an action reflecting the operational habit of the player can be implemented. Then, the control unit 10 quits the control character instruction processing, and returns to step S5 to continue the game execution processing.

According to the above-described processing, when the player issues an instruction to the control character (step S21), the number of instructions is counted (step S22), and a player's evaluation is performed on a control character's action executed according to the instruction (steps S24 and S25). An evaluation value of the corresponding action data increases/decreases by inputting the evaluation on the action of the control character by the player (steps S26 and S27). On the other hand, when an instruction has not yet been issued, an instruction is automatically selected with reference to the instruction count of each instruction (step S28). As for an action of the control character, first, a tendency of the action is determined by selecting action data based on an evaluation value (step S29). In addition, the control character takes an action reflecting the operational habit of the player by controlling the action with reference to the selected action data (step S30).

Therefore, the more the game is played, the more accumulated the instruction to the control character, the evaluation data thereof and the action information 31 of the player are, so that the accumulated information is reflected on the action of the control character. Since the control character performs a similar action to the operation of the player by referring to the action information 31 accumulated the information with respect to the operation of the player, the control character appears to grow by viewing the action of the operation character. Further, since an action frequently instructed by the player is performed even when there is no instruction, the control character can be developed and grown. Therefore, the game can be diversified and the satisfaction of the player can be increased. The processing of step S22 executed by the information accumulating portion 17 of the control unit 10 serves as an instruction information accumulating device, the processing of steps S25 to S27 executed by the game executing portion 16 serves as an action evaluating device, and the processing of steps S29 and S30 executed by the game executing portion 16 serves as a control character action control device.

The present invention is not limited to the above-described aspect, and can be carried out in various kinds of aspects. For example, in this aspect, an action of the control character with respect to an instruction from the player is evaluated based on the evaluation information 33, but is not limited thereto. By further enhancing an educational color, an actual action of the control character may be modified. For example, a ring may be provided around the control character. When the control character performs an action that is not intended by the player, the position or action of the control character may be corrected by pulling the ring. In this way, it is possible to modify the position of the control character by pulling the ring when the control character is not located at a desired place. And it is possible to make the control character attack in the front line by pulling the ring to the front line when the control character performs a defense action while the player desires an attack action. Therefore, the player can severely develop the character to modify the action, and instruct and guide the character. The action modification information may be accumulated. As in the above-described aspect, for example, in the processing of step S30, the action may be controlled so as to perform a modified action based on the information with respect to the action modification. Further, the action may be modified by another instruction operation and may be modified in an appropriate method. Further, the evaluation is performed when there is an instruction from the player (S24 to S26), but the present invention is not limited thereto. In the case that the player does not issue an instruction, the evaluation may be performed by the player even when the high-frequency instruction is selected based on the instruction information. The evaluation by the player may be performed by executing the same way as steps S24 to S26.

The present invention can be applied to the control of the control character associated with the operation character operated by the player. The present invention is not limited to a fighting game, and the present invention can be applied to a control character in various games such as an action game and a shooting game. According to the game applied, the control character may be set as various characters such as a rival and a friend of the control character.

Although the present aspect has been described with a store-installation game terminal apparatus, the present invention is not limited thereto and can be applied to various game machines such as a stationary game machine and a portable game machine. In this case, the instruction information 32 and the action information 31 may be stored and managed in the respective storage devices. Further, in the case of a game machine corresponding to a network, the instruction information 32 and the action information 31 may be managed by using the center server 3 as described above. On the other hand, the present invention can also be applied to various stand-alone game machines. When game machines communicate with each other without passing through a server, the instruction information 32 and the action information 31 may be directly transmitted and received.

## Claims

1. A game machine comprising:
an operation character action control device which controls an action of an operation character set to be operated by a player based on an operation of the player with respect to the operation character;
a control character action control device which controls an action of a control character to act in association with the operation character so as to select from a plurality of predetermined actions by referring to an instruction from the player to the control character;
an action information accumulating device which accumulates action information of respective actions of the operation character individually; and
an instruction information accumulating device which accumulates the instruction from the player with respect to an action of the control character as instruction information; wherein
the control character action control device determines an instruction with reference to the accumulated instruction information, selects an action corresponding to the instruction from the plurality of actions and controls an action of the control character based on the action information corresponding to the selected action in the case that there is no instruction from the player with respect to the control character.

2. The game machine of claim 1, further comprising
an action evaluating device which makes the player evaluate an action of the control character wherein
the control character action control device controls an action of the control character with further reference to the evaluation result of the action evaluating device.

3. The game machine of claim 2, wherein
the control character action control device controls an action of the control character so that the high-evaluated action is apt to be selected according to an evaluated ratio of the evaluation result.

4. The game machine of claim 2 or 3, wherein
The action evaluating device allow the player to modify an action of the control character as the evaluation of an action of the control character, and
the control character action control device controls an action of the control character so as to take a modified action.

5. The game machine of any one of claims 1 to 4, wherein
in the instruction information, each instruction selectable by the player and the count of selection of the instruction are accumulated in association with each other.

6. The game machine of any one of claims 1 to 5, wherein
in the action information, a plurality of action data counted the frequency of an action of the operation character selected based on an operation of the player is accumulated.

7. A game system including a plurality of game machines and a server that are communicatively connected to each other through a network, wherein
each of the game machine comprising:
an operation character action control device which controls an action of an operation character set to be operated by a player based on an operation of the player with respect to the operation character;
a control character action control device which controls an action of a control character to act in association with the operation character so as to select from a plurality of predetermined actions by referring to an instruction from the player to the control character;
an action information accumulating device which accumulates action information of respective actions of the operation character individually;
an instruction information accumulating device which accumulates the instruction from the player with respect to an action of the control character as instruction information; and
a data transmitting/receiving device which transmits the instruction information and the action information to the server in association with the player and receives the instruction information and the action information of the requesting player; wherein
the control character action control device determines an instruction with reference to the accumulated instruction information, selects an action corresponding to the instruction from the plurality of actions and controls an action of the control character based on the action information corresponding to the selected action in the case that there is no instruction from the player with respect to the control character, and
the server comprising an information managing device which manages the instruction information and the action information received from the game machine in association with the player.

8. A computer program causes a computer of a game machine to serve as:
an operation character action control device which controls an action of an operation character set to be operated by a player based on an operation of the player with respect to the operation character;
a control character action control device which controls an action of a control character to act in association with the operation character so as to select from a plurality of predetermined actions by referring to an instruction from the player to the control character;
an action information accumulating device which accumulates action information of respective actions of the operation character individually; and
an instruction information accumulating device which accumulates the instruction from the player with respect to an action of the control character as instruction information; wherein
the control character action control device determines an instruction with reference to the accumulated instruction information, selects an action corresponding to the instruction from the plurality of actions and controls an action of the control character based on the action information corresponding to the selected action in the case that there is no instruction from the player with respect to the control character.
